# EUROPÄISCHE PATENTSCHRIFT

(11) **EP 4 045 250 B1**
(45) Veröffentlichungstag und Bekanntmachung des Hinweises auf die Patenterteilung: **03.01.2024**
(21) Anmeldenummer: 20792577.7
(22) Anmeldetag: 09.10.2020
(51) Int. Cl.: B29B 9/06, B01J 2/20, B26D 5/02, B26D 5/20, B26D 7/26

(54) **KUNSTSTOFFSTRANGGRANULATOR MIT VERSTELLMECHANISMUS ZUM EINSTELLEN DES SCHNEIDSPALTS**
PLASTIC STRAND GRANULATOR WITH ADJUSTING MECHANISM FOR ADJUSTING THE CUTTING GAP
GRANULATEUR À JONCS DE MATIÈRE PLASTIQUE AVEC UN MÉCANISME DE RÉGLAGE POUR RÉGLER L'ESPACE DE COUPE

(30) Priorität: 15.10.2019 DE 102019127762
(43) Veröffentlichungstag der Anmeldung: 24.08.2022
(73) Patentinhaber: Maag Automatik GmbH, 63762 Großostheim (DE)
(72) Erfinder: FISCHER, Florian W., 63762 Großostheim (DE); DAHLHEIMER, Stefan, 63762 Großostheim (DE)
(74) Vertreter: Klunker IP Patentanwälte PartG mbB
(86) Internationale Anmeldenummer: PCT/EP2020/078482
(87) Internationale Veröffentlichungsnummer: WO 2021/074040

(56) Entgegenhaltungen:
- EP-A2- 2 853 877
- WO-A2-01/94088
- WO-A2-02/100621
- DE-A1- 1 964 413
- DE-A1- 3 620 015
- DE-A1-102007 016 347
- DE-A1-102008 033 425
- US-A- 2 782 853

## Beschreibung

Die Erfindung betrifft einen Kunststoffstranggranulator zum Pelletieren von Kunststoffsträngen und in diesem Zusammenhang insbesondere einen Verstellmechanismus zum Einstellen der Weite eines Schneidspalts zwischen einem Schneidrotor und einer dazu in geringem Abstand angeordneten Messerleiste.

Kunststoffstrangranulatoren werden in Kunststoffstranggranulieranlagen verwendet, in welchen schmelzflüssige Kunststoffstränge aus Düsen extrudiert und einem Wasserbad zugeführt werden, in dem sie abkühlen und die notwendige Festigkeit erhalten, um anschließend in dem Kunststoffstranggranulator zu Granulatkörnern pelletiert zu werden. Das Wasserbad kann als Wanne oder, wie in EP 0 452 376 B1, als Leiteinrichtung in Form einer - häufig geneigten - wasserbespülten Rinne ausgebildet sein. Varianten, wie die Kunststoffstränge vom Austritt aus den Extruderdüsen bis zum Eintritt in den Granulator abgekühlt und auf die gewünschte Granuliertemperatur gebracht werden, sind vielfältig. Der Granulator weist ein Gehäuse mit einer Zuführöffnung zum Zuführen der zu granulierenden Kunststoffstränge und einer Austrittsöffnung zum Abführen des Kunststoffgranulats auf. Innerhalb des Gehäuses befindet sich als rotierende Messeranordnung ein walzenförmiger Schneidrotor mit über dem Umfang gleichmäßig verteilten Schneidmessern sowie eine parallel zur Drehachse des Schneidrotors verlaufende feststehende Messerleiste, an der die Kunststoffstränge mittels des Schneidrotors zu Granulatkörnern granuliert werden. Das Granulat fällt schwerkraftbedingt durch die Auslassöffnung unten aus dem Granulatorgehäuse heraus.

Zwischen dem Schneidrotor und der Messerleiste existiert ein Schneidspalt, der zur Erzielung einer gewünschten Granulatqualität möglichst exakt eingestellt und dessen Weite, insbesondere auch im laufenden Betrieb, nachgestellt werden muss. So ist es z. B. aus US 2,782,853 bekannt, die Messerleiste an einem schwenkbaren Messerträger zu montieren und über die Schwenkstellung des Messerträgers die Schneidspaltweite einzustellen. Dabei kommt ein Regelkreis zur Anwendung, in welchem ein auf einer Oberfläche des rotierenden Schneidrotors angreifender Taster eine beispielsweise temperaturbedingte Änderung des Schneidrotordurchmessers aufnimmt und ein entsprechendes Signal an eine Steuerung abgibt, mittels der die Schwenkposition des Messerhalters so verändert wird, dass der Abstand zwischen dem Schneidrotor und der Messerleiste wiederhergestellt wird, indem eine Justierschraube entsprechend vor- oder zurückgedreht wird. Die Justierschraube greift dabei an einem Ende des Messerträgers an, welches bezogen auf die Schwenkachse des Messerträgers der Messerleiste gegenüberliegt. Insgesamt greifen zwei zueinander beabstandete Stellschrauben an dem Messerhalter in der beschriebenen Weise an, sodass durch entsprechendes Vor- oder Zurückdrehen der ein oder anderen Stellschraube auch die Parallelität zwischen der Messerleiste und der Drehachse des Schneidrotors einstellbar ist.

Zur Hintergrundinformation können als allgemeiner Stand der Technik die folgenden Druckschriften genannt werden. DE 199 33 497 A1 offenbart eine Vorrichtung zur Schneidspalteinstellung zwischen einem Schneidmesser und einem Gegenmesserkörper.

DE 19 64 413 A offenbart eine Einrichtung zum Granulieren von thermoplastischen Kunststoffen mit einem Messerkopf, der die aus einer Düsenplatte austretenden Messstränge granuliert.

DE 10 2008 033 425 A1 offenbart einen Stranggranulator zum Zerteilen von strangförmigem Material, welcher aus einem Einzugswerk für die Zuführung des zu zerteilenden Materials und einem drehbaren Schneidrotor mit darauf angeordneten Schneidezähnen und einer Schneidleiste besteht.

Aufgabe der vorliegenden Erfindung ist es, den Verstellmechanismus zum Einstellen der Schneidspaltweite zu optimieren.

Gemäß einem ersten Aspekt umfasst der Verstellmechanismus mindestens einen Aktuator mit Differentialgewinde, um die Position der Messerleiste entsprechend einzustellen. Ein Differentialgewinde weist üblicherweise ein reduzierendes Übersetzungsverhältnis auf.

Ein Differentialgewinde zeichnet sich durch zwei ineinander laufende Gewinde mit unterschiedlicher Steigung aus. Differentialgewinde sind von Differentialgewindeschrauben her bekannt, welche aus drei koaxialen Teilen bestehen, von denen das innere Teil ein Außengewinde mit erster Steigung, das äußere Teil ein Innengewinde mit zweiter Steigung, und das mittlere Teil ein Innengewinde mit der ersten Steigung und ein Außengewinde mit der zweiten Steigung besitzt. Bei geeigneter Ausbildung lässt sich durch Drehen des mittleren Teils das innere Teil relativ zum äußeren Teil (oder alternativ das äußere Teil relativ zum inneren Teil) axial verlagern, ohne dass sich das axial verlagerte Teil dabei dreht. Dabei führt die Axialverlagerung des vorgenannten mittleren Teils innerhalb des vorgenannten äußeren (oder inneren) Teils durch Drehen des mittleren Teils um einen relativ großen Drehwinkel lediglich zu einer kleinen axialen Verlagerung des vorgenannten inneren (bzw. äußeren) Teils, wobei das Übersetzungsverhältnis um so niedriger ist, je geringer die Differenz zwischen beiden Steigungen ist. Mittels des Differentialgewindes mit reduzierendem Übersetzungsverhältnis lässt sich daher eine noch bessere Feinjustierung erzielen als etwa mit herkömmlichen Feingewindeschrauben. Im Gegenteil können in dem Differentialgewinde normale Gewinde mit entsprechend höherer Festigkeit verwendet werden. Insbesondere bedarf es darüber hinaus aufgrund des Übersetzungsverhältnisses nur geringer Betätigungskräfte, so dass selbst eine manuelle Betätigung ohne Hilfsmittel möglich ist.

Das Differentialgewinde kann ein Übersetzungsverhältnis zwischen 1:2 und 1:20 besitzen, vorzugsweise etwa 1:5, was einem Verhältnis zwischen der ersten und der zweiten Steigung von 1:1,2 entspricht.

Der Verstellmechanismus weist eine Schwenkachse auf, um die herum die Messerleiste schwenkbar gelagert ist, wobei eine Schwenkposition der Messerleiste mittels des Aktuators einstellbar ist, so wie dies grundsätzlich auch in der eingangs genannten US 2,782,853 der Fall ist. Beispielsweise kann die Messerleiste entsprechend auf einem schwenkbar gelagerten Messerträger montiert sein. Soweit nun die Messerleiste einerseits und ein Angriffspunkt des Aktuators an dem die Messerleiste haltenden Messerträger andererseits in unterschiedlichem Abstand zur Schwenkachse angeordnet sind, ist in Bezug auf die Verlagerung der Messerleiste relativ zur axialen Verstellung des Aktuators eine zusätzliche Hebelwirkung zu berücksichtigen. Vorteilhafterweise greift der Aktuator an einer geeigneten Stelle zwischen der Schwenkachse und der Messerleiste an dem schwenkbaren Messerhalter an, und zwar möglichst nahe an der Messerleiste. Wenn der Angriffspunkt des Aktuators mittig zwischen der Messerleiste und der Schwenkachse liegt (und der Aktuator in einer Richtung etwa tangential zur Schwenkachse an dem Messerhalter angreift), verschlechtert sich das Übersetzungsverhältnis um den Faktor 2. Am günstigsten ist es natürlich, wenn der Aktuatorangriffspunkt sogar noch weiter von der Schwenkachse beabstandet ist als die Messerleiste, wobei das aus Platzgründen schwierig zu realisieren sein kann.

Vorzugsweise ist der Aktuator von außerhalb des Gehäuses betätigbar, in welchem der Schneidrotor angeordnet ist. Insbesondere lässt sich der Aktuator aufgrund des besonderen reduzierenden Übersetzungsverhältnisses, wie erwähnt, leicht manuell betätigen.

Die Justagegenauigkeit des Verstellmechanismus kann sichergestellt werden, indem das Differentialgewinde des Aktuators spielfrei ausgeführt wird, insbesondere durch eine Federvorspannung, z.B. mittels Tellerfedern.

Ähnlich wie in der vorgenannten US 2,782,853, kann der Verstellmechanismus erfindungsgemäss vorzugsweise zwei solche Aktuatoren mit Differentialgewinde aufweisen, die parallel zueinander in möglichst weitem Abstand nebeneinander angeordnet sind. Um Platz zu sparen, können die Aktuatoren innerhalb der Granulatorgehäuseaußenwände derart angeordnet sein, dass sie sich darin parallel zu den Außenseiten der Wände vor- und zurückbewegen.

Alternativ dazu kann der Verstellmechanismus lediglich einen Aktuator mit Differentialgewinde und parallel dazu eine Gleitführung aufweisen, wobei die Messerleiste quer zur Gleitführung ausgerichtet und der Verstellmechanismus entlang der Gleitführung gleitend ausgebildet ist. Die Positionseinstellung der Messerleiste erfolgt dann nur über den einen Aktuator. Wenn der Messerhalter, auf dem die Messerleiste montiert ist, entsprechend verwindungssteif ausgebildet ist und die Gleitführung sehr exakt ohne nennenswertes Spiel ausgeführt ist, dann genügt der eine Aktuator zur Einstellung der Schneidspaltweite. Das bedeutet aber auch, dass sich dieser Vorteil unabhängig davon einstellt, ob der Aktuator mit einem Differentialgewinde mit reduzierendem Übersetzungsverhältnis ausgebildet ist oder eine andere Art von Aktuator ist, beispielsweise ein Aktuator mit Feingewinde. Dieser Aspekt der Erfindung wird daher als selbständig erfinderisch angesehen. Insbesondere braucht die Parallelität relativ zur Schneidrotorachse nicht über zwei zueinander beabstandete Aktuatoren eingestellt zu werden, sondern die Parallelität zum Schneidrotor kann beispielsweise durch entsprechende Justage der Messerleiste auf dem Messerhalter justiert werden.

Nichtsdestoweniger ist es vorteilhaft, einen Feststellmechanismus vorzusehen, mittels dessen die Position der Messerleiste relativ zur Gleitführung fixierbar ist, sodass es auf die Verwindungssteifheit und/oder eine spielfreie Gleitführung nicht so entscheidend ankommt.

Der Feststellmechanimus kann eine Spannhülse umfassen, um die Messerleiste zu fixieren. Insbesondere kann die Spannhülse eine geschlitzte Spannhülse sein, in der ein Gleitstift verschieblich geführt ist. Durch Komprimierung der geschlitzten Spannhülse wird der Gleitstift in der Spannhülse und dadurch die Messerleiste relativ zur Spannhülse fixiert.

Gemäß einem zweiten Aspekt ist der Verstellmechanismus in einen Regelkreis integriert, mittels dessen der Schneidspalt auf eine vorgegebene Weite automatisch justierbar ist. Ein solcher Regelkreis kann vorteilhaft einen Schwingungssensor aufweisen, um Schwingungen am Kunststoffstranggranulator aufzunehmen, sowie eine Auswerteeinrichtung zum Extrahieren von ein oder mehreren, für die Spaltweite charakteristischen Parametern aus den mittels des Schwingungssensors aufgenommenen Schwingungen, wobei der Regelkreis des weiteren eine Regeleinrichtung umfasst, mittels der der Verstellmechanismus in Abhängigkeit von den extrahierten Schwingungsparametern so justiert wird, dass die vorgegebene Schneidspaltweite eingestellt wird bzw. aufrechterhalten bleibt.

Beispielsweise können Referenzparameter, die in Feldversuchen gewonnen wurden, in einem Speicher hinterlegt sein und von der Auswerteeinrichtung mit dem aus den aufgenommenen Schwingungen extrahierten Schwingungsparametern verglichen werden, um basierend auf diesem Vergleich eine Stellgröße für die Regeleinrichtung zum Verändern der Schneidspaltweite zu erzeugen. Die extrahierten Schwingungsparameter können mindestens eine Schwingungsamplitude und/oder mindestens eine Schwingungsfrequenz umfassen.

Bei den mittels des Schwingungssensors aufgenommenen Schwingungen handelt es sich vorzugsweise um Körperschallwellen und/oder Oberflächenwellen, die an einem Bauteil des Kunststoffstranggranulators auftreten. Besonders bevorzugt ist es in diesem Zusammenhang, wenn die Körperschallwellen oder Oberflächenwellen mittels eines dafür vorgesehenen Senders an oder in das betreffende Bauteil des Kunststoffstranggranulators eingeleitet und mittels eines vom Sender beabstandeten Empfängers entsprechend erfasst werden. Es können auch mehr als ein Sender und/oder mehr als ein Empfänger vorgesehen sein. Insbesondere kann der Sender ein Ultraschallsender sein, und der Empfänger empfängt das Signal des Ultraschallsenders. Derartige Sensoren werden beispielsweise von der Best Sense AG angeboten. Alternativ können Sender und Empfänger am gleichen Ort vorgesehen sein, wobei der Empfänger dann reflektierte Wellen des Senders erfasst.

Gemäß einer ersten Variante sind mindestens ein Sender und mindestens ein Empfänger in oder an einem Lager des Schneidrotors angeordnet. Gemäß einer zweiten Variante können alternativ oder zusätzlich mindestens ein Sender und mindestens ein Empfänger in oder an der Messerleiste oder einem Lager der Messerleiste, insbesondere also in oder an dem Messerträger, angeordnet sein. In Bezug auf die Schneidspaltweite besonders aussagekräftige Schwingungsparameter konnten mittels eines Ultraschallsenders und eines dazu beabstandeten Empfängers erzielt werden, die in einem Lager des Schneidrotors angeordnet sind.

Nachfolgend wird die Erfindung beispielhaft anhand der begleitenden Zeichnungen erläutert. Darin zeigen:
Figur 1 eine Kunststoffstranggranulieranlage mit einem Kunststoffstranggranulator;
Figur 2 einen Ausschnitt eines Kunststoffstranggranulators;
Figur 3 einen Aktuator mit Differentialgewinde;
Figur 4 eine Gleitführung;
Figur 5 ein Ablaufdiagramm für einen Regelkreis zur Justierung des Granulators auf einen Soll-Betriebszustand; und
Figur 6 an einem Granulator gemessene Ultraschallschwingungen.

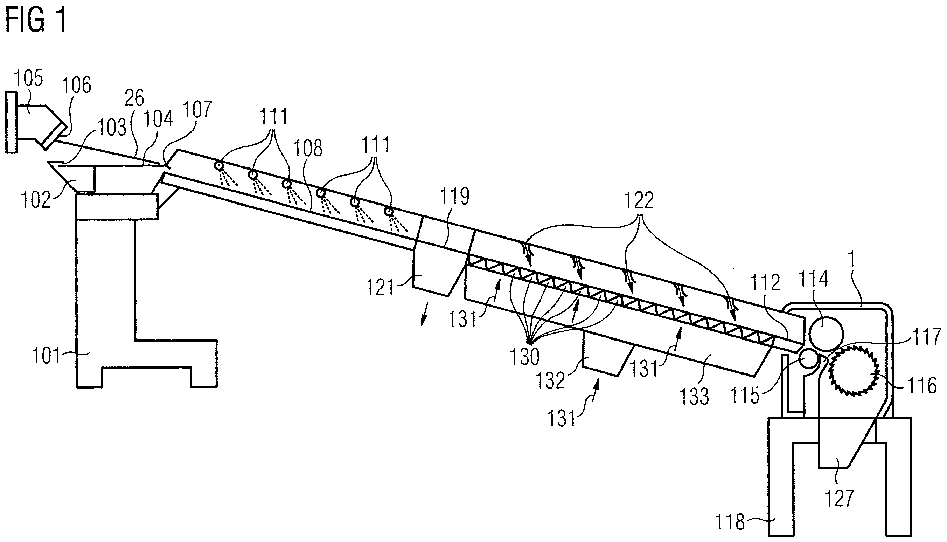

Figur 1 zeigt eine Kunststoffstranggranulieranlage anhand eines konkreten Ausführungsbeispiels. In diesem Ausführungsbeispiel umfasst die Granulieranlage ein Gestell 101, auf dem ein Wasserkasten 102 befestigt ist, dem in bekannter Weise Wasser zugeführt wird, welches als Kühlflüssigkeit dient. Die Kühlflüssigkeit strömt aus einer Schlitzdüse 103 auf einen Ablauftisch 104 und bildet darauf einen nach rechts ablaufenden Wasserfilm. Der Wasserfilm nimmt auf den Ablauftisch 104 auftreffende Kunststoffstränge 26 eines extrudierbaren Materials, hier eines thermoplastischen Kunststoffs, mit. Oberhalb des Ablauftischs 104 ist ein Düsenpaket 105 angeordnet, von dem eine Düse 106 dargestellt ist. Dem Düsenpaket 105 wird in bekannter Weise thermoplastischer Kunststoff schmelzflüssig zugeführt und aus der Düse 106 ausgepresst. Mehrere Düsen 106 liegen auf einer Linie nebeneinander. Mehrere solcher Linien können auch eine zweidimensionale Düsenanordnung bilden. Aus den Düsen 106 austretende Stränge 26 fallen zunächst auf den Ablauftisch 104 und werden von dem den Ablauftisch 104 überströmenden Wasserfilm mitgenommen, bis sie über das Ende 107 des Ablauftischs 104 zur Ablaufrinne 108 gelangen, auf der sie in etwa paralleler Anordnung herabgleiten. Kühlfluid-Sprühdüsen 111 und 122 können zusätzlich Kühlfluid, also insbesondere Wasser oder ggf. auch Luft, auf die Auflaufrinne 108 sprühen und damit den auf die Kunststoffstränge 26 ausgeübten Kühleffekt erhöhen. Die Ablaufrinne 108 leitet mit ihrem unteren Ende 112 die über sie herabgleitenden Kunststoffstränge 26 dem Granulatorgehäuse 1 zu, der zwei Einzugswalzen 114 und 115 sowie einen Schneidrotor116 enthält. Das Granulatorgehäuse 1 ist auf einem Ständer 118 montiert. Die Ablaufrinne 108 ist vor ihrem unteren Ende 112 mit dicht benachbarten Eintrittsdüsen 130 für einen Fluidstrom versehen, der hier durch Pfeile 131 angedeutet ist. Dieser Fluidstrom wird durch einen Schacht 132 in einen Kasten 133 geführt, der sich unterhalb des Bereichs der Ablaufrinne 108 mit den Eintrittsdüsen 130 befindet. Als Fluidstrom wird hier ein Luftstrom verwendet, der die über diesen Bereich der Ablaufrinne 108 geführten Kunststoffstränge 26 umspült und vom Boden der Ablaufrinne 108 derart abhebt, dass die Kunststoffstränge 26 weitgehend reibungsfrei geführt werden. Zwischen dem Bereich der Ablaufrinne 108 mit den Kühlmittel-Sprühdüsen 111 und dem Bereich mit den Eintrittsdüsen 130 ist eine Entwässerungsstrecke 119 vorgesehen, unterhalb der ein Wasserablauf 121 angeordnet ist. Die Entwässerungsstrecke 119 besteht aus einem Sieb, das hier den Boden der Ablaufrinne 108 bildet. Durch dieses Sieb im Bereich der Entwässerungsstrecke 119 läuft das am oberen Ende der Ablaufrinne 108 zugeführte Kühlwasser weitgehend ab. Dem Fachmann sind darüber hinaus zahlreiche Alternativen bekannt, die schmelzflüssig aus den Düsen 106 austretenden Kunststoffstränge 26 abzukühlen und mit oder ohne Kühlflüssigkeit dem Granulatorgehäuse 1 zuzuführen. Das von dem Granulator erzeugte Granulat fällt dann durch einen Ausfallschacht 127 zur weiteren Verarbeitung heraus.

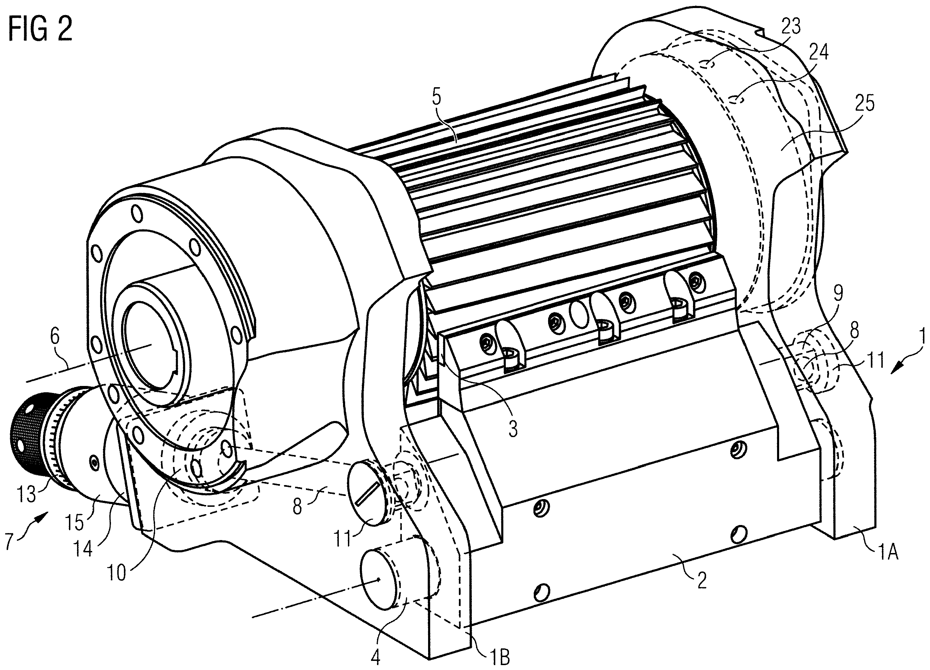

Figur 2 zeigt einen selbstständigen Teil eines Granulatorgehäuses 1 mit Seitenwandteilen 1A und 1B. Zwischen den beiden Seitenwandteilen 1A, 1B ist ein Messerträger 2 mit einer darauf montierten Messerleiste 3 um eine in den Seitenwandteilen 1A, 1B gelagerte Schwenkachse 4 schwenkbar gelagert. Darüber hinaus ist in den beiden Seitenwandteilen 1A, 1B ein Schneidrotor 5 mit einer Vielzahl von gleichmäßig zueinander beabstandeten Schneidmessern um eine Drehachse 6 drehbar gelagert. Der Schneidrotor 5 liegt der Messerleiste 3 gegenüber. Im Betriebszustand mit drehendem Schneidrotor 5 werden dem Schneidrotor 5 zugeführte Kunststoffstränge mittels der Schneidmesser des Schneidrotors 5 an der Messerleiste 3 abgeschert. Die Länge des dabei entstehenden Granulats wird durch die Zuführgeschwindigkeit der Kunststoffstränge, die Drehzahl des Schneidrotors 5 und dem Abstand zwischen den Schneidmessern des Schneidrotors 5 bestimmt. Die Qualität des Kunststoffgranulats hängt nicht nur von der Schärfe der Schneidmesser des Schneidrotors 5 und der Messerleiste 3, sondern insbesondere auch von der Weite des Schneidspalts zwischen der Messerleiste 3 und dem Schneidrotor 5 ab.

Die Drehachse 6 des Schneidrotors 5 und die Schwenkachse 4 des Messerträgers 2 sind parallel zueinander ausgerichtet, und die Messerleiste 3 wird auf dem Messerträger 2 so justiert, dass sie ebenfalls parallel dazu ausgerichtet ist, sodass der Schneidspalt über die gesamte Länge der Messerleiste 3 konstant ist. Um nun die Schneidspaltweite zwischen der Messerleiste 3 und dem Schneidrotor 5 einzustellen, greifen gemäß einem ersten Ausführungsbeispiel zwei Aktuatoren 7 an dem schwenkbaren Messerträger 2 an. Es handelt sich hier um Linearaktuatoren. Der oder die Aktuatoren 7 sind an das Granulatorgehäuse 1 von außen angeflanscht, sodass sie manuell betätigbar sind. Aus Platzgründen und zur Realisierung eines möglichst schmalen Granulatorgehäuses sind die Stellkolben 8 der Aktuatoren 7 in den Seitenwandteilen 1A, 1B untergebracht, wobei in Figur 2 nur einer der Aktuatoren 7 erkennbar ist. Von dem zweiten Aktuator 7 sieht man lediglich das distale Ende des Stellkolbens 8. Die distalen Enden der Stellkolben 8 sind in einer im Messerträger 2 drehbar gelagerten Welle 9 fixiert, während die proximalen Enden der Stellkolben 8 jeweils um einen parallel dazu orientierten Fixierstift 10 schwenken können, sodass es bei einer im Wesentlichen linearen Verlagerung des Stellkolbens 8 nicht zum Verklemmen der miteinander gekoppelten Bauteile kommen kann. Vielmehr können die Stellkolben 8 im Zuge ihrer Axialverlagerung eine klemmfreie Stellung einnehmen. Die Durchgangslöcher durch die Seitenwandteile 1A, 1B zum Hindurchführen der Welle 9 durch das Granulatorgehäuse 1 und den Messerträger 2 sind mit Schutzkappen 11 abgedeckt.

Werden nun die Stellkolben 8 der beiden Linearaktuatoren 7 vor- oder zurückbewegt, so schwenkt der Messerträger 2 mit der darauf montierten Messerleiste 3 um die Schwenkachse 4 vom Schneidrotor 5 weg oder auf den Schneidrotor 5 zu, wodurch sich die Weite des Schneidspalts zwischen Schneidrotor 5 und Messerleiste 3 entsprechend einstellen lässt. Dies kann aufgrund einer speziellen Ausgestaltung des Aktuators 7, wie später noch detaillierter erläutert wird, in einfacher Weise manuell ohne jegliche Hilfsmittel erfolgen, erfolgt aber vorzugsweise zumindest während des laufenden Betriebs automatisch über eine entsprechende Regeleinrichtung, die die Schneidspaltweite auf einem vorgegebenen Wert konstant hält.

Da eine gleichzeitige, exakte Justage der beiden Aktuatoren 7 nicht einfach zu gewährleisten ist, sieht ein zweites Ausführungsbeispiel vor, dass lediglich einer der beiden Aktuatoren 7 vorhanden ist, wohingegen der Stellkolben 8 auf der gegenüberliegenden Seite nicht Teil eines Aktuators ist, sondern lediglich parallel zum ersten Aktuator in einer Gleitführung geführt wird. Aufgrund der Verwindungssteifigkeit des Messerträgers 2 und bei entsprechend spielfreier Lagerung der Schwenkachse 4 des Messerträgers 2 im Granulatorgehäuse 1 lässt sich die Messerleiste 3 relativ zur Drehachse 6 des Schneidrotors 5 bewegen, ohne dass die Parallelität der Messerleiste 3 relativ zur Drehachse 6 verloren geht. Der Stellkolben 8 auf der dem Aktuator 7 gegenüberliegenden Seite wird vor der Verlagerung der Messerleiste 3 lediglich gelöst und anschließend wieder fixiert, sodass die Messerleiste 3 für den laufenden Betrieb beidseitig fest eingespannt ist. Für eine Justierung während des laufenden Betriebs eignet sich dagegen die Ausführungsvariante mit zwei Aktuatoren 7 besser.

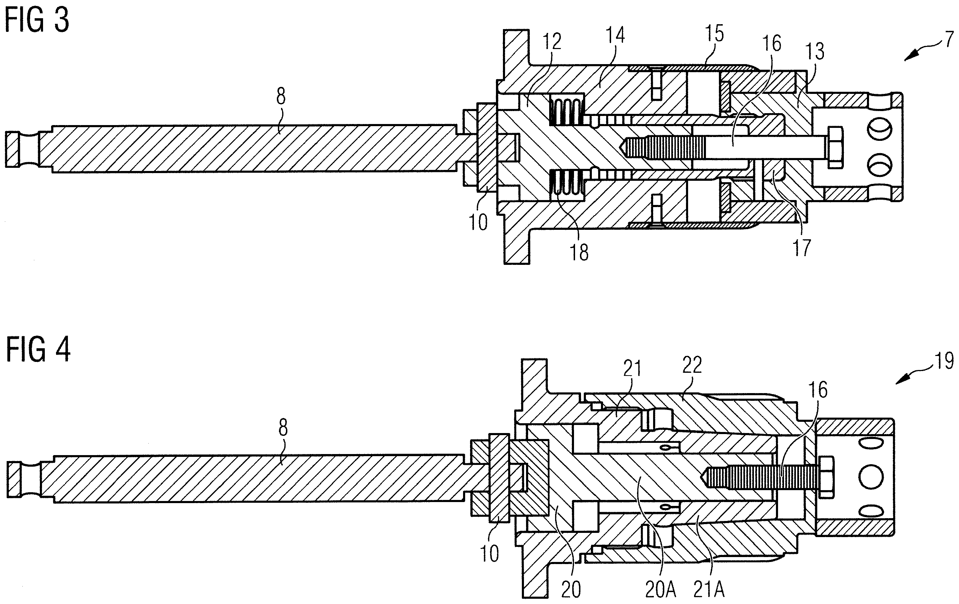

Figur 3 zeigt einen Querschnitt durch den Aktuator 7 mit dem Stellkolben 8 und dem Fixierstift 10, um den herum der Stellkolben 8 schwenken kann. Der Aktuator 7 ist mit einem Differentialgewinde ausgestattet, welches ein reduzierendes Übersetzungsverhältnis besitzt. Im Wesentlichen besteht der Aktuator 7 aus drei beweglichen Bauteilen 8, 12 und 13, einem ortsfesten Bauteil 14, einer Staubkappe 15 und einer Anschlagschraube 16, wobei an dem beweglichen Bauteil 13 ein Bauelement 17 drehfest fixiert ist. Das ortsfeste Bauteil 14 wird außen am Granulatorgehäuse 1 angeflanscht. Es besitzt ein Innengewinde mit einer ersten Steigung, in welches das bewegliche Bauteil 13 mit seinem Bauelement 17, welches ein Außengewinde mit derselben Steigung besitzt, hinein- und herausgeschraubt werden kann. Dementsprechend lässt sich das bewegliche Bauteil 13 in entgegengesetzte Richtungen drehen. Darüber hinaus besitzt das Bauelement 17 ein Innengewinde mit einer zweiten Steigung, die sich von der ersten Steigung des ersten Gewindes nur geringfügig unterscheidet, wobei der Faktor vorzugsweise zwischen 1 und 1,5 liegt, besonders bevorzugt bei etwa 1,2. Das andere bewegliche Bauteil 12 besitzt ein Außengewinde ebenfalls mit dieser zweiten Steigung und ist darüber in das Bauelement 17 des beweglichen Bauteils 13 eingeschraubt. An dem beweglichen Bauelement 12 ist der Stellkolben 8 fixiert, welcher zwar an dem Fixierstift 10 schwenken kann, jedoch aufgrund der Fixierung seines distalen Endes in der Welle 9 nicht um seine Längsachse drehen kann. Da der Stellkolben 8 sich nicht um seine Längsachse drehen kann, kann sich auch das bewegliche Bauteil 12 in dem ortsfesten Bauteil 14 nicht drehen, sondern lediglich axial verlagern.

Eine Drehung des beweglichen Bauteils 13 hat dementsprechend zur Folge, dass sich das Bauelement 17 in dem ortsfesten Bauteil 14 beispielsweise um einen Betrag X in eine Richtung bewegt. Hätten das Innengewinde des Bauelements 17 und das Außengewinde des innenliegenden Bauteils 12 die gleiche Steigung, so würde sich das Bauelement 17 lediglich zwischen dem ortsfesten Bauteil 14 und dem innenliegenden Bauteil 12 vor- bzw. zurückbewegen. Da sich die beiden Steigungen aber geringfügig voneinander unterscheiden, beispielsweise um einen Faktor 1,2, führt die Verlagerung des Bauelements 17 um den Betrag X innerhalb des ortsfesten Bauteils 14 dazu, dass sich auch das bewegliche Bauteil 12 axial verlagert, jedoch nur um einen entsprechend geringeren Betrag von 0,2 · X. Anders ausgedrückt hat das Differentialgewinde dann ein reduzierendes Übersetzungsverhältnis von 1: 5. Vorzugsweise liegt das reduzierende Übersetzungsverhältnis zwischen 1: 2 und 1:20.

Gemäß einem bevorzugten Ausführungsbeispiel beträgt die Steigung des Außengewindes des Bauelements 17 1 mm pro Umdrehung, und die Steigung des Innengewindes des Bauelements 17 1,2 mm pro Umdrehung, was aufgrund des vorbeschriebenen Effekts zur Folge hat, dass der Stellkolben 8 bei einer Umdrehung des beweglichen Bauteils 13 nicht um 1 mm, sondern um lediglich 0,2 mm axial verlagert wird. Um den Stellkolben 8 um 0,05 mm axial zu verlagern, bedarf es somit lediglich einer Rotation des beweglichen Bauelements 13 um 90°.

Eine axiale Verlagerung des Stellkolbens 8 um 0,05 mm hat allerdings nicht zur Folge, dass sich auch die Schneidspaltweite um 0.05 mm ändert. Das Maß der Verlagerung der Messerleiste 3 hängt vielmehr davon ab, an welcher Stelle der Stellkolben 8 an dem Messerträger 2 angreift. Liegt der Angriffspunkt etwa mittig zwischen der Messerleiste 3 und der Schwenkachse 4 des Messerträgers 3 und greift der Stellkolben 8 an diesem Punkt in etwa tangential relativ zur Schwenkachse 4 an, so ergibt sich eine Hebelwirkung mit einem Übersetzungsverhältnis von 2:1. Anders ausgedrückt führt eine Drehung des beweglichen Bauteils 13 um 90° dann nicht zu einer Verlagerung der Messerleiste 3 von 0,05 mm, entsprechend der Axialverlagerung des Stellkolbens 8, sondern zu einer Verlagerung von 0,1 mm, was immer noch ein sehr akzeptables Ergebnis ist für eine justiergenaue Positionierung der Messerleiste 3. Je näher die Welle 9, an welcher der Stellkolben 8 angreift, zur Messerleiste 3 liegt, desto günstiger wirkt sich dies auf das Gesamtübersetzungsverhältnis des Verstellmechanismus aus.

Noch günstiger ist es natürlich, wenn sich die Messerleiste 3 radial zwischen der Schwenkachse 4 des Messerträgers 2 und der Welle 9, an der der Stellkolben 8 angreift, befindet. In dem dargestellten Ausführungsbeispiel wird dies allerdings durch die Lagerung des Schneidrotors 5 im Granulatorgehäuse 1 verhindert. Alternativ kann der Aktuator 7 daher beispielsweise mit seinem Stellkolben 8 von der entsprechend gegenüberliegenden Seite aus in den Seitenwandteilen 1A, 1B angeordnet sein, sodass eine Kollision mit der Schneidrotorlagerung vermieden wird.

Auf dem beweglichen Bauteil 13 ist außen eine Skalierung angebracht, welche die Drehung des Bauteils 13 in eine Axialverlagerung der Messerleiste 3 relativ zum Schneidrotor 5 übersetzt. Des Weiteren sind innerhalb des Aktuators 7 mehrere axial aufeinanderliegende Tellerfedern 18 vorgesehen, die dafür sorgen, dass ein immer vorhandenes axiales Spiel des Differentialgewindes an einer vorgegebenen Seite anliegt.

Wie zuvor erwähnt, kann anstelle des zweiten Aktuators 7 eine Gleitführung für den Stellkolben 8 vorgesehen sein, insbesondere wenn der Aktuator 7 nur manuell verstellt werden soll. Die Gleitführung sollte natürlich für den Betriebszustand fixierbar sein. Eine solche fixierbare Gleitführung 19 wird nachfolgend anhand der Figur 4 näher erläutert. Darin bezeichnet die Bezugsziffer 8 wiederum den Stellkolben, der sich nicht vom Stellkolben 8 des Aktuators 7 unterscheidet. Auch die Gleitführung 19 besitzt ein innenliegendes, lediglich axial verlagerbares, bewegliches Bauteil 20 mit einem Gleitstift 20A, welches gleitend in einem ortsfesten Bauteil 21 geführt wird, das als integraler Bestandteil eine geschlitzte Spannhülse 21A aufweist. Das ortsfeste Bauteil 21 ist am Granulatorgehäuse 1 in derselben Weise angeflanscht wie das ortsfeste Bauteil 14 des Aktuators 7. Auf das ortsfeste Bauteil 21 lässt sich eine Spannhülse 22 derart aufschrauben, dass der Durchmesser der geschlitzten Spannhülse 21A des ortsfesten Bauteils 21 reduziert und dadurch der darin verschiebliche Gleitstift 20A des Bauteils 20 entsprechend fixiert wird. Das heißt, vor einer Verlagerung der Messerleiste 3 relativ zum Schneidrotor 5 wird die Spannhülse 22 von der geschlitzten Spannhülse 21A des ortsfesten Bauteils 21 gelöst und anschließend wieder fixiert. Darüber hinaus besitzt die Gleitführung 19 wiederum einen Fixierstift 10 und eine Anschlagschraube 16 in derselben Weise wie der Aktuator 7.

Für die automatische Justierung der Messerleiste 3 relativ zum Schneidrotor 5 während des laufenden Betriebs ist eine besondere Regeleinrichtung vorgesehen, die über Schwingungssensoren charakteristische Betriebszustände des Granulators erfasst, auswertet und darauf basierend eine automatische Verstellung der Messerleiste 3 bewirkt. In dem konkreten Ausführungsbeispiel gemäß Figur 2 sind ein Ultraschallsender 23 und ein Empfänger 24 in geringem Abstand zueinander in einer Lagerschale 25 des Schneidrotors 5 integriert und leiten in die Lagerschale 25 Körperschall ein bzw. nehmen Körperschall auf. Dementsprechend sendet der Sender 23 Ultraschallwellen in einer vorgeschriebenen Wellencharakteristik aus, und der Empfänger 24 empfängt diese Wellen, die allerdings aufgrund des Betriebsverhaltens des Granulators in unterschiedlichster Weise moduliert sind.

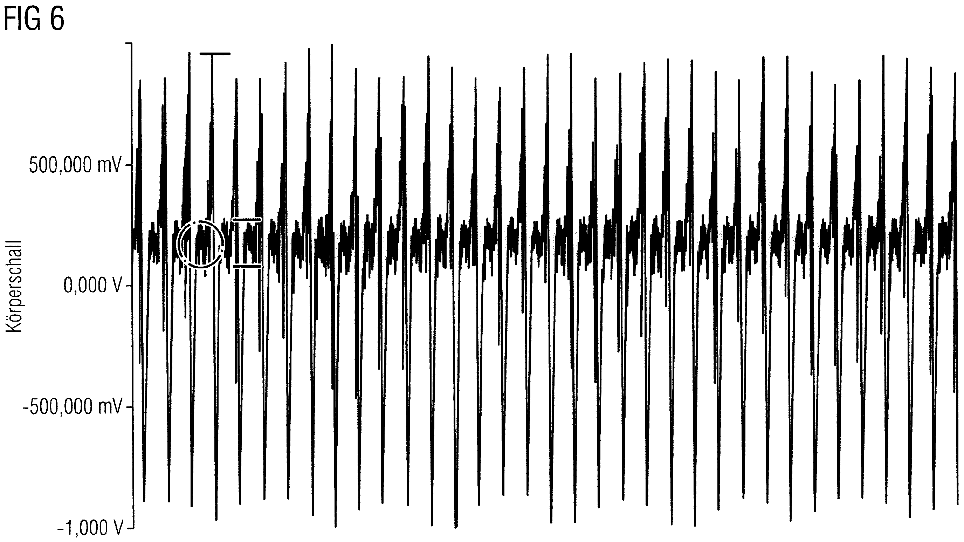

Figur 6 zeigt ein Beispiel des während des Betriebs mittels eines solchen Empfängers 24 aufgenommenen Körperschalls. Dieses Messsignal ist einerseits charakteristisch für den konkreten Granulator und andererseits charakteristisch für verschiedene Betriebsparameter. So lässt sich beispielsweise aus der maximalen Amplitude der aufgenommenen Schwingungen näherungsweise auf die Härte des verarbeiteten Kunststoffmaterials schließen. Die Schwingungsbereiche mit geringerer Amplitude zwischen den jeweiligen Maximalausschlägen geben Aufschluss über die Anzahl der gegenwärtig verarbeiteten Kunststoffstränge und lassen somit erkennen, ob möglicherweise ein oder mehrere Strangabrisse zu verzeichnen sind. Von besonderer Bedeutung ist die Höhe der Amplitude in den Schwingungsbereichen mit geringerer Amplitude, weil sie insbesondere über die Weite des Schneidspalts zwischen der Messerleiste 3 und dem Schneidrotor 5 Aufschluss gibt.

Durch Hinterlegung verschiedener Referenztabellen für unterschiedlichste Granulatorzustände (abhängig vom granulierten Material, Anzahl der granulierten Kunststoffstränge, Strangdicke, Rotordrehzahl, Schneidspaltweite, Rotorschärfe (scharf/stumpf)) lassen sich entsprechend Rückschlüsse auf den jeweiligen Granulatorzustand ziehen, wie eben auf die Schneidspaltweite.

Ein entsprechendes Verfahren zum Betreiben des Kunststoffstranggranulators sieht somit das Verstellen der Schneidspaltweite durch Verlagern der Position der Messerleiste relativ zum Schneidrotor vor, wobei Schwingungen beispielsweise in der Lagerschale des Schneidrotors 5 oder aber alternativ (oder zusätzlich) an der Messerleiste 3 oder am Messerträger 2 aufgenommen werden, daraus ein oder mehrere Schwingungsparameter extrahiert werden, wie beispielsweise die Höhe der niedrigeren Amplituden gemäß Figur 6, und der oder die Aktuatoren 7 zum Einstellen der Schneidspaltweite entsprechend justiert werden. Dies erfolgt vorzugsweise mittels einer Regeleinrichtung während des Betriebs.

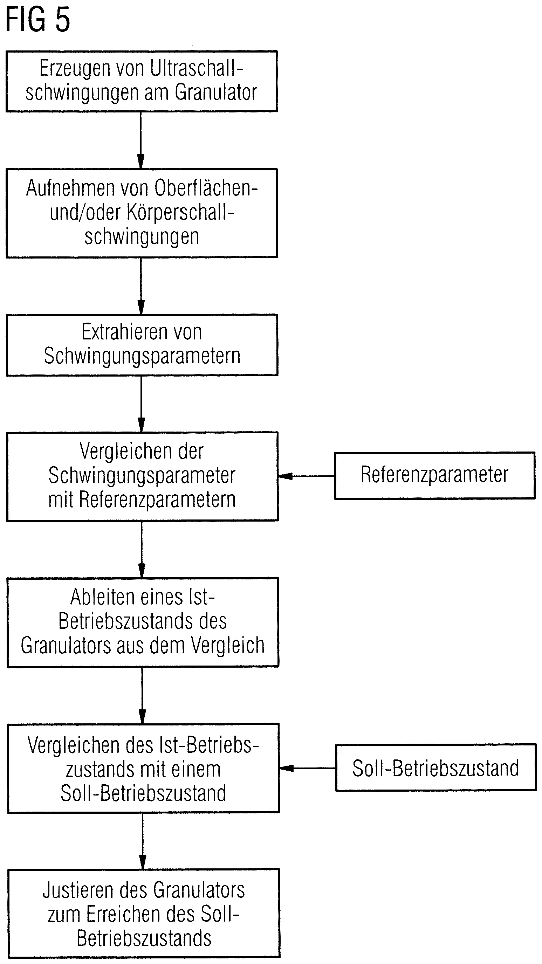

Konkret kann das Verfahren ablaufen wie in Figur 5 dargestellt. Zunächst werden Ultraschallschwingungen am Granulator erzeugt, beispielsweise durch Einleitung von Körperschallschwingungen oder Oberflächenschwingungen. Diese werden aufgenommen und daraus ein oder mehrere Schwingungsparameter extrahiert. Die extrahierten Schwingungsparameter werden mit hinterlegten Referenzparametern verglichen und daraus ein Ist-Betriebszustand des Granulators abgeleitet. Der Ist-Betriebszustand wird mit einem vorgegebenen Soll-Betriebszustand verglichen, und je nach Vergleichsergebnis wird der Granulator so justiert, dass der Soll-Betriebszustand erreicht wird. Dieses Verfahren kann kontinuierlich oder in vorgegebenen Zeitabschnitten wiederholt werden, sodass ein entsprechender Regelkreis zur Justage des Betriebszustands des Granulators besteht, insbesondere zur Justage der Schneidspaltweite.

## Patentansprüche

1. Kunststoffstranggranulator zum Pelletieren von Kunststoffsträngen (26), umfassend:
- einen Schneidrotor (5), der um eine Drehachse (6) rotierbar ist,
- eine Messerleiste (3), welche relativ zum Schneidrotor (5) so angeordnet ist, dass die Messerleiste (3) und der Schneidrotor (5) zusammen einen Schneidspalt zum Pelletieren von dem Kunststoffstranggranulator zugeführten Kunststoffsträngen (26) bilden, und
- einen Verstellmechanismus zum Einstellen des Schneidspalts durch Verlagerung einer Position der Messerleiste (3) relativ zu dem Schneidrotor (5),
**dadurch gekennzeichnet, dass** der Verstellmechanismus mindestens einen Aktuator (7) mit Differentialgewinde mit reduzierendem Übersetzungsverhältnis umfasst, mittels dessen die Position der Messerleiste (3) einstellbar ist,
wobei der Verstellmechanismus eine Schwenkachse (4) aufweist, um die die Messerleiste (3) schwenkbar gelagert ist, und eine Schwenkposition der Messerleiste (3) mittels des mindestens einen Aktuators (7) einstellbar ist.

2. Kunststoffstranggranulator nach Anspruch 1, wobei das Differentialgewinde ein reduzierendes Übersetzungsverhältnis zwischen 1:2 und 1:20, vorzugsweise von etwa 1:5 besitzt.

3. Kunststoffstranggranulator nach Anspruch 1 oder 2, wobei die Messerleiste (3) an einem Messerträger (2) montiert ist, der um die Schwenkachse (4) schwenkbar ist, und wobei ein Angriffspunkt des mindestens einen Aktuators (7) an dem Messerträger (2) zwischen der Schwenkachse (4) und der Messerleiste (3) liegt oder sogar noch weiter von der Schwenkachse (4) beabstandet ist als die Messerleiste (3).

4. Kunststoffstranggranulator nach Anspruch 3, wobei die Messerleiste (3) und der Angriffspunkt des mindestens einen Aktuators (7) an dem Messerträger (2) derart relativ zur Schwenkachse (4) angeordnet sind, dass sich in Bezug auf die Verlagerung der Messerleiste (3) relativ zu einer Verstellung des mindestens einen Aktuators (7) eine Hebelwirkung zwischen 1:1 und 2:1 ergibt.

5. Kunststoffstranggranulator nach einem der Ansprüche 1 bis 4, umfassend ein Granulatorgehäuse (1), in dem der Schneidrotor (5) angeordnet ist, wobei der mindestens eine Aktuator (7) von außerhalb des Gehäuses (1) betätigbar ist.

6. Kunststoffstranggranulator nach einem der Ansprüche 1 bis 5, wobei das Differentialgewinde des mindestens einen Aktuators (7) durch Aufbringen einer geeigneten Vorspannung spielfrei ausgeführt ist.

7. Kunststoffstranggranulator nach einem der Ansprüche 1 bis 6, wobei der Verstellmechanismus zwei der Aktuatoren (7) mit Differentialgewinde aufweist, die parallel zueinander angeordnet sind.

8. Kunststoffstranggranulator nach einem der Ansprüche 1 bis 7, wobei der Verstellmechanismus einen Aktuator (7) mit Differentialgewinde und parallel dazu eine Gleitführung (19) aufweist, wobei die Messerleiste (3) quer zur Gleitführung (19) ausgerichtet und entlang der Gleitführung (19) gleitend angeordnet ist, vorzugsweise umfassend einen Feststellmechanismus, mittels dessen die Position der Messerleiste (3) relativ zur Gleitführung (19) fixierbar ist, wobei der Feststellmechanismus vorzugsweise eine Spannhülse (22) umfasst, mittels der die Messerleiste (3) fixierbar ist, wobei die Spannhülse (22) vorzugsweise eine geschlitzte Spannhülse (21A) ist, in welcher ein Gleitstift (20A) verschieblich geführt ist.

9. Kunststoffstranggranulator nach einem der Ansprüche 1 bis 8, wobei der Verstellmechanismus manuell betätigbar ist.

10. Kunststoffstranggranulator zum Pelletieren von Kunststoffsträngen (26) nach einem der Ansprüche 1 bis 9, wobei der Verstellmechanismus mittels eines Regelkreises automatisch auf eine vorgegebene Schneidspaltweite justierbar ist, wobei der Regelkreis vorzugsweise umfasst:
- einen Schwingungssensor, welcher Schwingungen an dem Kunststoffstranggranulator aufnimmt,
- eine Auswerteeinrichtung, die eingerichtet ist, ein oder mehrere Schwingungsparameter aus den mittels des Schwingungssensors aufgenommenen Schwingungen zu extrahieren,
- eine Regeleinrichtung, die eingerichtet ist, den Verstellmechanismus in Abhängigkeit von den extrahierten Schwingungsparametern auf die vorgegebene Schneidspaltweite zu justieren, und
- vorzugsweise einen Speicher, in welchem Referenzparameter hinterlegt sind, und wobei die Auswerteeinrichtung eingerichtet ist, die extrahierten Schwingungsparameter mit den hinterlegten Referenzparametern zu vergleichen und basierend auf dem Vergleich eine Stellgröße für die Regeleinrichtung zum Verändern der Schneidspaltweite zu erzeugen.

11. Kunststoffstranggranulator nach Anspruch 10, wobei die extrahierten Schwingungsparameter mindestens eine Schwingungsamplitude und/oder mindestens eine Schwingungsfrequenz umfassen.

12. Kunststoffstranggranulator nachAnspruch 10 oder 11, wobei die Schwingungen entweder Körperschallwellen oder Oberflächenwellen oder eine Kombination aus Körperschall- und Oberflächenwellen umfassen.

13. Kunststoffstranggranulator nach einem der Ansprüche 10 bis 12, umfassend mindestens einen Sender (23) zum Einleiten von Körperschallwellen oder Oberflächenwellen oder einer Kombination aus Körperschall- und Oberflächenwellen und mindestens einen vom Sender (23) beabstandeten Empfänger (24) zum Empfangen der Körperschallwellen oder Oberflächenwellen oder der Kombination aus Körperschall- und Oberflächenwellen, wobei der mindestens eine Sender (23) vorzugsweise ein Utraschallsender ist.

14. Kunststoffstranggranulator nach Anspruch 13, wobei einer des mindestens einen Senders (23) und einer des mindestens einen Empfängers (24) in oder an einem Lager des Schneidrotors (5) angeordnet sind.

15. Kunststoffstranggranulator nach Anspruch 13 oder 14, wobei einer des mindestens einen Senders (23) und einer des mindestens einen Empfängers (24) in oder an der Messerleiste (3) oder einem Lager der Messerleiste (3) angeordnet sind.

## Claims

1. Plastic strand pelletiser for pelletising plastic strands (26), comprising:
- a cutting rotor (5) which is rotatable about an axis of rotation (6),
- a blade bar (3) arranged relative to the cutting rotor (5) such that the blade bar (3) and the cutting rotor (5) together form a cutting gap for pelletising plastic strands (26) fed to the plastic strand pelletiser, and
- an adjustment mechanism for adjusting the cutting gap by shifting a position of the blade bar (3) relative to the cutting rotor (5),
**characterised in that** the adjustment mechanism comprises at least one actuator (7) having a differential thread with reducing transmission ratio, by means of which the position of the blade bar (3) is adjustable,
wherein the adjustment mechanism has a pivot axis (4) about which the blade bar (3) is pivotably mounted, and a pivot position of the blade bar (3) is adjustable by means of the at least one actuator (7).

2. Plastic strand pelletiser according to claim 1, wherein the differential thread has a reducing transmission ratio of between 1:2 and 1:20, preferably of about 1:5.

3. Plastic strand pelletiser according to claim 1 or 2, wherein the blade bar (3) is mounted on a blade carrier (2) which is pivotable about the pivot axis (4), and wherein a point of engagement of the at least one actuator (7) on the blade carrier (2) lies between the pivot axis (4) and the blade bar (3) or is spaced even further from the pivot axis (4) than the blade bar (3).

4. Plastic strand pelletiser according to claim 3, wherein the blade bar (3) and the point of action of the at least one actuator (7) on the blade carrier (2) are arranged relative to the pivot axis (4) in such a way that a leverage effect of between 1:1 and 2:1 results with respect to the displacement of the blade bar (3) relative to an adjustment of the at least one actuator (7).

5. Plastic strand granulator according to any one of claims 1 to 4, comprising a granulator housing (1) in which the cutting rotor (5) is arranged, wherein the at least one actuator (7) is actuable from outside the housing (1).

6. Plastic strand pelletiser according to any one of claims 1 to 5, wherein the differential thread of the at least one actuator (7) is designed to be free of play by applying a suitable pretension.

7. Plastic strand pelletiser according to any one of claims 1 to 6, wherein the adjustment mechanism comprises two of the actuators (7) with differential threads arranged parallel to each other.

8. Plastic strand pelletizer according to any one of claims 1 to 7, wherein the adjustment mechanism comprises an actuator (7) with differential thread and a sliding guide (19) parallel thereto, wherein the knife bar (3) is aligned transversely to the slide guide (19) and is arranged to slide along the slide guide (19), preferably comprising a locking mechanism, by means of which the position of the blade bar (3) relative to the slide guide (19) can be fixed, the locking mechanism preferably comprising a clamping sleeve (22) by means of which the blade bar (3) can be fixed, the clamping sleeve (22) preferably being a slotted clamping sleeve (21A) in which a sliding pin (20A) is displaceably guided.

9. Plastic strand pelletiser according to any one of claims 1 to 8, wherein the adjustment mechanism is manually operable.

10. Plastic strand pelletiser for pelletising plastic strands (26) according to any one of claims 1 to 9, wherein the adjustment mechanism is automatically adjustable to a predetermined cutting gap width by means of a control loop, the control loop preferably comprising:
- a vibration sensor which records vibrations on the plastic strand pelletiser,
- an evaluation device which is set up to extract one or more vibration parameters from the vibrations recorded by means of the vibration sensor,
- a control device which is set up to adjust the adjusting mechanism to the predetermined cutting gap width as a function of the extracted vibration parameters, and
- preferably a memory in which reference parameters are stored, and wherein the evaluation device is set up to compare the extracted vibration parameters with the stored reference parameters and, based on the comparison, to generate a control value for the control device for changing the cutting gap width.

11. Plastic strand pelletiser of claim 10, wherein the extracted vibration parameters comprise at least one vibration amplitude and/or at least one vibration frequency.

12. Plastic strand pelletiser according to claim 10 or 11, wherein the vibrations comprise either structure-borne sound waves or surface waves or a combination of structure-borne sound and surface waves.

13. Plastic strand pelletiser according to any one of claims 10 to 12, comprising at least one transmitter (23) for introducing structure-borne sound waves or surface waves or a combination of structure-borne sound waves and surface waves and at least one receiver (24) spaced from the transmitter (23) for receiving the structure-borne sound waves or surface waves or the combination of structure-borne sound waves and surface waves, wherein the at least one transmitter (23) is preferably a ultrasonic transmitter.

14. Plastic strand pelletiser according to claim 13, wherein one of the at least one transmitter (23) and one of the at least one receiver (24) are arranged in or on a bearing of the cutting rotor (5).

15. Plastic strand pelletiser according to claim 13 or 14, wherein one of the at least one transmitter (23) and one of the at least one receiver (24) are arranged in or on the blade bar (3) or a bearing of the blade bar (3).

## Revendications

1. Granulateur de cordons de matière plastique destiné à la pelletisation de cordons de matière plastique (26), comprenant :
- un rotor de coupe (5) pouvant tourner autour d'un axe de rotation (6),
- une barre à couteau (3) agencée de telle façon relativement au rotor de coupe (5) que la barre à couteau (3) et le rotor de coupe (5) constituent ensemble une fente de coupe pour la pelletisation de cordons de matière plastique (26) amenés au granulateur de cordons de matière plastique, et
- un mécanisme d'ajustement pour le réglage de la fente de coupe par déplacement d'une position de la barre à couteau (3) relativement au rotor de coupe (5),
**caractérisée en ce que** le mécanisme d'ajustement comprend au moins un actionneur (7) à filetage différentiel avec rapport de transmission réducteur, au moyen duquel la position de la barre à couteau (3) peut être réglée,
cependant que le mécanisme d'ajustement comporte un axe de pivotement (4) autour duquel la barre à couteau (3) est montée de façon à pouvoir être pivotée, et une position de pivotement de la barre à couteau (3) peut être réglée au moyen du au moins un actionneur (7).

2. Granulateur de cordons de matière plastique selon la revendication 1, cependant que le filetage différentiel a un rapport de transmission réducteur compris entre 1:2 et 1:20, de préférence d'environ 1:5.

3. Granulateur de cordons de matière plastique selon la revendication 1 ou 2, cependant que la barre à couteau (3) est montée à un porte-couteau (2) pouvant pivoter autour de l'axe de pivotement (4), et cependant qu'un point d'attaque du au moins un actionneur (7) au porte-couteau (2) se trouve entre l'axe de pivotement (4) et la barre à couteau (3) ou est même encore plus espacé de l'axe de pivotement (4) que la barre à couteau (3).

4. Granulateur de cordons de matière plastique selon la revendication 3, cependant que la barre à couteau (3) et le point d'attaque du au moins un actionneur (7) au porte-couteau (2) sont agencés de telle façon relativement à l'axe de pivotement (4) que, en relation avec le déplacement d'une position de la barre à couteau (3) relativement à un ajustement du au moins un actionneur (7), un effet de levier entre 1:1 et 2:1 est engendré.

5. Granulateur de cordons de matière plastique selon une des revendications de 1 à 4, comprenant un boîtier de granulateur (1) dans lequel le rotor de coupe (5) est agencé, cependant que le au moins un actionneur (7) peut être actionné depuis l'extérieur du boîtier (1).

6. Granulateur de cordons de matière plastique selon une des revendications de 1 à 5, cependant que le filetage différentiel du au moins un actionneur (7) est réalisé sans jeu par application d'une précontrainte appropriée.

7. Granulateur de cordons de matière plastique selon une des revendications de 1 à 6, cependant que le mécanisme d'ajustement comporte deux des actionneurs (7) à filetage différentiel, lesquels sont agencés parallèlement entre eux.

8. Granulateur de cordons de matière plastique selon une des revendications de 1 à 7, cependant que le mécanisme d'ajustement comporte un actionneur (7) à filetage différentiel et, parallèlement à cela, une glissière de guidage (19), cependant que la barre à couteau (3) est orientée transversalement à la glissière de guidage (19) et agencée de façon à glisser le long de la glissière de guidage (19), de préférence comprenant un mécanisme de blocage au moyen duquel la position de la barre à couteau (3) relativement à la glissière de guidage (19) peut être fixée, cependant que le mécanisme d'ajustement comprend de préférence une douille de serrage (22) au moyen de laquelle la barre à couteau (3) peut être fixée,
cependant que la douille de serrage (22) est de préférence une douille de serrage fendue (21A) dans laquelle un pivot guide (20A) est guidé de manière déplaçable.

9. Granulateur de cordons de matière plastique selon une des revendications de 1 à 8, cependant que le mécanisme d'ajustement est actionnable manuellement.

10. Granulateur de cordons de matière plastique destiné à la pelletisation de cordons de matière plastique (26) selon une des revendications de 1 à 9, cependant que mécanisme d'ajustement peut être réglé automatiquement sur une largeur prédéterminée de fente de coupe au moyen d'un circuit de régulation, cependant que le circuit de régulation comprend de préférence :
- un capteur de vibrations qui enregistre des vibrations au granulateur de cordons de matière plastique,
- un équipement d'évaluation conçu pour extraire un ou plusieurs paramètres de vibration à partir des vibrations enregistrées au moyen du capteur de vibrations,
- un équipement de régulation conçu pour, en fonction des paramètres de vibration extraits, régler le mécanisme d'ajustement sur la largeur prédéterminée de fente de coupe, et
- de préférence une mémoire dans laquelle des paramètres de référence sont stockés, et cependant que l'équipement d'évaluation est conçu pour comparer avec les paramètres de référence stockés les paramètres de vibration extraits, et, sur la base de la comparaison, générer une grandeur de réglage pour l'équipement de régulation pour la modification de la largeur de fente de coupe.

11. Granulateur de cordons de matière plastique selon la revendication 10, cependant que les paramètres de vibration extraits comprennent au moins une amplitude de vibration et/ou au moins une fréquence de vibration.

12. Granulateur de cordons de matière plastique selon la revendication 10 ou 11, cependant que les vibrations comprennent soit des ondes sonores de structure, soit des ondes de surface, soit une combinaison d'ondes sonores de structure et d'ondes de surface.

13. Granulateur de cordons de matière plastique selon une des revendications de 10 à 12, comprenant au moins un émetteur (23) pour l'introduction d'ondes sonores de structure ou d'ondes de surface ou d'une combinaison d'ondes sonores de structure et d'ondes de surface, et au moins un récepteur (24) espacé de l'émetteur (23) pour la réception des ondes sonores de structure ou des ondes de surface ou de la combinaison d'ondes sonores de structure et d'ondes de surface, cependant que le au moins un émetteur (23) est de préférence un émetteur d'ultrasons.

14. Granulateur de cordons de matière plastique selon la revendication 13, cependant que un du au moins un émetteur (23) et un du au moins un récepteur (24) sont agencés dans ou à un palier du rotor de coupe (5).

15. Granulateur de cordons de matière plastique selon la revendication 13 ou 14, cependant que un du au moins un émetteur (23) et un du au moins un récepteur (24) sont agencés dans la ou à la barre à couteau (3) ou dans le ou au palier de la barre à couteau (3).
